Europäisches Patentamt

European Patent Office

Office européen des brevets

(19)

(11) Veröffentlichungsnummer: **0 325 668 B1**

(12) **EUROPÄISCHE PATENTSCHRIFT**

(45) Veröffentlichungstag der Patentschrift: **15.09.93**

(51) Int. Cl.5: **H04B 7/005**

(21) Anmeldenummer: **88101158.9**

(22) Anmeldetag: **27.01.88**

(54) **Autoradio mit einem Kaskadenentzerrer in nichtrekursiver Form.**

(43) Veröffentlichungstag der Anmeldung:
**02.08.89 Patentblatt 89/31**

(45) Bekanntmachung des Hinweises auf die
Patenterteilung:
**15.09.93 Patentblatt 93/37**

(84) Benannte Vertragsstaaten:
**DE FR GB IT**

(56) Entgegenhaltungen:
**EP-A- 0 072 542**

**IEEE JOURNAL ON SELECTED AREAS IN
COMMUNICATIONS, Band SAC-5, Nr. 2, Februar 1987, Seiten 226-237, IEEE, New York,
US; K.-D. KAMMEYER et al.: "A modified
adaptive FIR equalizer for multipath echo
cancellation in FM transmission"**

(73) Patentinhaber: **Blaupunkt-Werke GmbH
Postfach 77 77 77, Robert-Bosch-Strasse 200
D-31132 Hildesheim(DE)**

(72) Erfinder: **Kammeyer, Karl Dirk, Prof. Dr.-Ing.
Finkennest 6
D-2110 Buchholz/Nordheide(DE)**

(74) Vertreter: **Eilers, Norbert, Dipl.-Phys.
Blaupunkt-Werke GmbH, Patente und Lizenzen, Postfach 77 77 77
D-31132 Hildesheim (DE)**

EP 0 325 668 B1

**Beschreibung**

Die Erfindung betrifft ein Autoradio gemäß dem Oberbegriff des Patentanspruchs 1.

Bekanntlich stellt sich beim Empfang von FM-Signalen häufig das Problem einer Mehrwegeübertragung bzw. eines Mehrwegempfangs. Dabei werden neben der direkten einfallenden Welle auch noch eine oder mehrere reflektierte Wellen empfangen, die gegenüber der direkten Welle mit einer Verzögerung eintreffen. Besonders gravierend ist das Problem des Mehrwegempfanges bei mobilen Empfängern, beispielsweise bei Autoradios, mit wechselndem Empfangsort und somit wechselnden Empfangsbedingungen. Bei einem solchen mobilen Empfang liegt ein zeitvarianter Übertragungskanal vor, da sich wegen des ständig wechselnden Empfangsortes sowohl die Anzahl als auch die Verzögerungszeiten der eintreffenden Wellen laufend verändern können.

Die störende Mehrwegeübertragung äußert sich in der Praxis bei der Wiedergabe der demodulierten FM-Signale durch starke Verzerrungen, die in ungünstigen Fällen ein solches Maß annehmen können, daß der Benutzer eines Empfängers eine Sprachwiedergabe nicht mehr verstehen kann.

Da am Übertragungskanal selbst wegen der gegebenen Örtlichkeiten und Empfangsorte keine korrigierenden Maßnahmen vorgenommen werden können, ist man bestrebt, die Verzerrungen im Empfänger durch den Einsatz eines Entzerrers zu kompensieren.

Aus der EP-A-0072542 sind "adaptive Entzerrer" bekannt, die in Kaskade geschaltet sind und die es gestatten, die Entzerrerkoeffizienten adaptiv an die jeweiligen Eigenschaften des Übertragungskanals, d. h. an die jeweils herrschenden Empfangsverhältnisse anzupassen. Damit lassen sich auch Störungen durch Mehrwegempfang in einem Autoradio mindern.

Die bekannten Entzerrer zeigen jedoch unerwünschte Einschwingvorgänge, die sich bei schnell wechselnden Empfangsverhältnissen bei einer Autofahrt im Autoradio bemerkbar machen.

Ziel der Erfindung ist es, diese Einschwingvorgänge zu verkürzen.

Dieses Ziel erreicht die Erfindung bei dem im Oberbegriff des Anspruchs 1 genannten Autoradios durch die im kennzeichnenden Teil angegebenen Merkmale.

Gemäß einer zweckmäßigen Ausgestaltung der Erfindung zeichnet sich das Autoradio mit einem Kaskadenentzerrer dadurch aus, daß die partiellen Ableitungen höherer Ordnung der Entzerrerblöcke bei der Berechnung der Gradienten

$$\frac{d\underline{y}}{d\hat{\underline{v}}}$$

und/oder

$$\frac{d\underline{y}}{d\hat{\kappa}}$$

vernachlässigt werden. Nachfolgend wird die Erfindung zum besseren Verständnis anhand der in der Zeichnung dargestellten Ausführungsbeispiele näher erläutert. Es zeigen:

Fig. 1        die Kaskadenform eines Kaskadenentzerrers mit mehreren Entzerrerblöcken,

Fig. 2        den allgemeinen Aufbau eines Entzerrerblockes des Kaskadenentzerrers gemäß Fig. 1 für minimalphasige Kanäle,

Fig. 3        den allgemeinen Aufbau eines Entzerrerblockes des Kaskadenentzerrers gemäß Fig. 1 für allpaßhaltige Kanäle,

Fig. 4        eine allgemeine Struktur eines Entzerrerblockes gemäß Fig. 2 für minimalphasige Kanäle,

Fig. 5        eine allgemeine Struktur eines Entzerrerblockes gemäß Fig. 3 für allpaßhaltige Kanäle,

Fig. 6        ein Prinzipschaltbild zur Verdeutlichung der adaptiven Einstellung der Entzerrerkoeffizienten,

Fig. 7        ein Blockschaltbild eines adaptiven Systems zur Identifizierung der Kanalparameter r und x , mit differenzierenden Netzwerken $E_{\hat{x}}(z)$ und $E_{\hat{r}}(z)$, sowie einer adaptiven Anpassung der Referenzamplitude $a_0$,

Fig 8        ein Blockschaltbild eines differenzierenden Netzwerkes $\hat{Er}(z)$,

Fig 9        ein Blockschaltbild eines differenzierenden Netzwerkes $\hat{Ex}(z)$,

Fig 10 und 11    jeweils ein schematisches Blockschaltbild zur Erläuterung der Produktregel der Differentiation betreffend die Ableitungen

$$\frac{\partial\, E(t)}{\partial\, \hat{r}}$$

und

$$\frac{\partial\, E(t)}{\partial\, \hat{x}} \, ,$$

Fig 12    ein Blockschaltbild zur schaltungstechnischen Erzeugung der Gradienten

$$\frac{\partial\, y}{\partial\, \hat{r}}$$

und

$$\frac{\partial\, y}{\partial\, \hat{x}} \, ,$$

und

Fig 13    eine vereinfachte Anordnung des Blockschaltbildes gemäß Fig. 12.

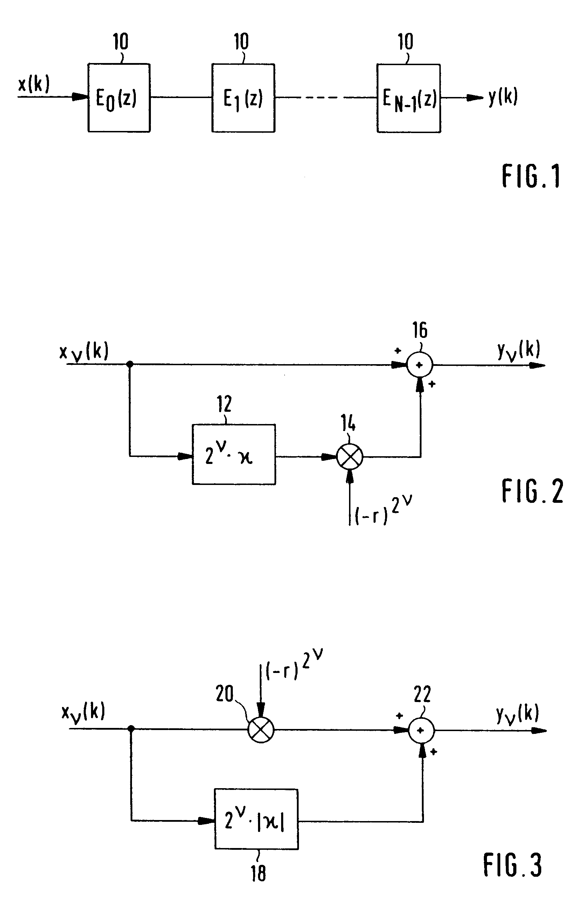

Den Ausgangspunkt für den neuen Kaskadenentzerrer bildet die Entzerrerstruktur gemäß Fig. 1 mit den in Reihe geschalteten Entzerrerblöcken 10, wie er an sich durch die eingangs erwähnte DE-OS 35 17 485 bekannt ist, wobei die Entzerrerkoeffizienten allerdings fest eingestellt sind. Dem Kaskadenentzerrer wird das durch Mehrwegeempfang gestörte FM-Signal x(k) in Basisbandlage komplex zugeführt, und am Ausgang des Kaskadenentzerrers kann das entzerrte FM-Signal in Basisbandlage (komplex) y(k) entnommen werden.

Die allgemeine Form eines $\nu$-ten Entzerrerblockes für minimalphasige Kanäle (Hauptwelle größer als reflektierte Welle) ist in Fig. 2 für den Fall x≧0 dargestellt. Die Entzerrerblöcke umfassen also jeweils ein Verzögerungsglied 12, einen Multiplizierer 14 und einen Addierer 16.

Durch die Bezeichnung (k) ist ein laufender Zeitindex beschrieben, und $\hat{r}$ gibt das Verhältnis der komplexen Amplituden der beiden Empfangssignalanteile (direkt empfangenes Signal und Mehrwegeempfangssignal) an. Durch das Verzögerungsglied 12 werden $2^{\nu}\cdot\hat{x}$-Verzögerungen bewirkt.

Fig. 3 zeigt mit einem Verzögerungsglied 18, einem Multiplizierer 20 und einem Addierer 22 die allgemeine Form eines $\nu$-ten Entzerrerblockes für allpaßhaltige Kanäle (Hauptwelle kleiner als reflektierte Welle) für den Fall $\hat{x}≦0$. Das Verzögerungsglied 18 verursacht $2^{\nu}\cdot|\hat{x}|$-Verzögerungen.

Im allgemeinen ist $\hat{x}$ nicht ganzzahlig, so daß auch $2^{\nu}\cdot\hat{x}$ ebenfalls nicht ganzzahlig ist. Die Realisierung der korrekten Verzögerung erfolgt durch Interpolation (z.B. bei quadratischer Interpolation unter Verwendung von drei Interpolationskoeffizienten $\alpha_{-1}$, $\alpha_0$, $\alpha_1$ ).

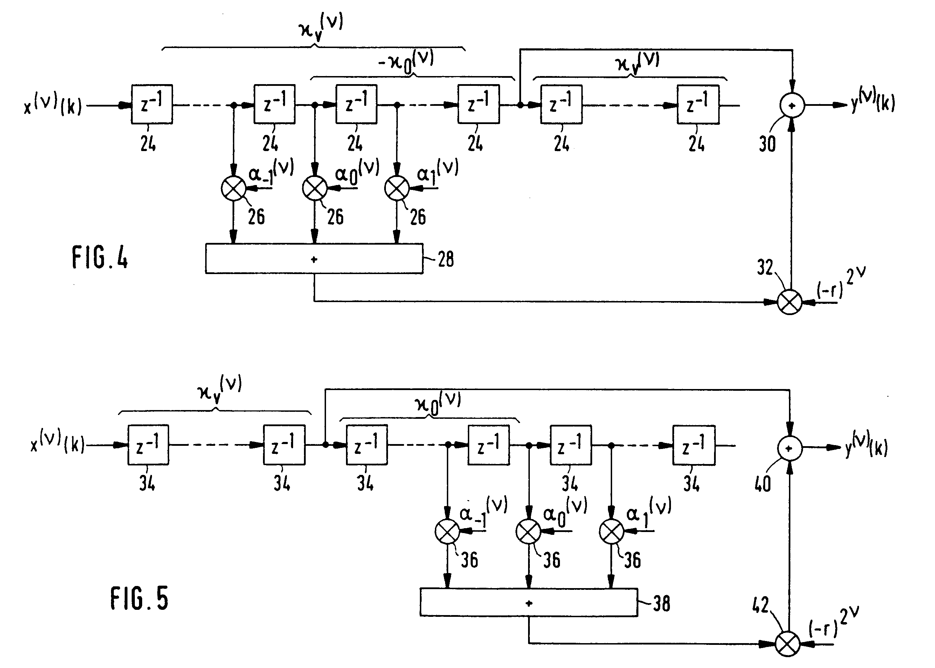

Zur Vervollständigung ist in Fig. 4 und 5 jeweils die universelle Struktur einer Entzerrerstufe gemäß der oben erwähnten DE-OS 35 17 485 dargestellt, und zwar in Fig. 4 für minimalphasige Kanäle und in Fig. 5 für allpaßhaltige Kanäle. Es sei erwähnt, daß es sich hierbei um eine feste Entzerrerstruktur mit vorgegebenen und fest eingestellten Entzerrerkoeffizienten handelt.

Das Blockschaltbild gemäß Fig. 4 umfaßt Verzögerungsglieder 24, Multiplizierer 26, ein Addiernetzwerk 28, einen Addierer 30 sowie einen Multiplizierer 32 und betrifft die Struktur einer Entzerrerstufe mit quadratischer Interpolation (L = 1) für $\hat{x}_0^{(\nu)}≦0$.

Die Darstellung in Fig. 5 bezieht sich auf die universelle Struktur einer Entzerrerstufe mit quadratischer Interpolation (L = 1) für $\hat{x}_0^{(\nu)}≧0$. Das Blockschaltbild zeigt Verzögerungsglieder 34, Multiplizierer 36, ein Addiernetzwerk 38, einen Addierer 40 sowie einen Multiplizierer 42.

Die voranstehende Beschreibung von Fig. 1 - 5 erläutert soweit die an sich bekannte feste Entzerrerstruktur als Ausgangspunkt der Erfindung.

3

Vergleichbar der DE-OS 35 43 898 erfolgt bei dem neuen Kaskadenentzerrer eine iterative Schätzung der Kanalparameter $\hat{r}$ und $\hat{x}$ am Empfänger auf der Basis der nachfolgenden Zielfunktion F:

$$F = (|y(k)|^2 - a_0{}^2)^2 = (\epsilon(k))^2$$

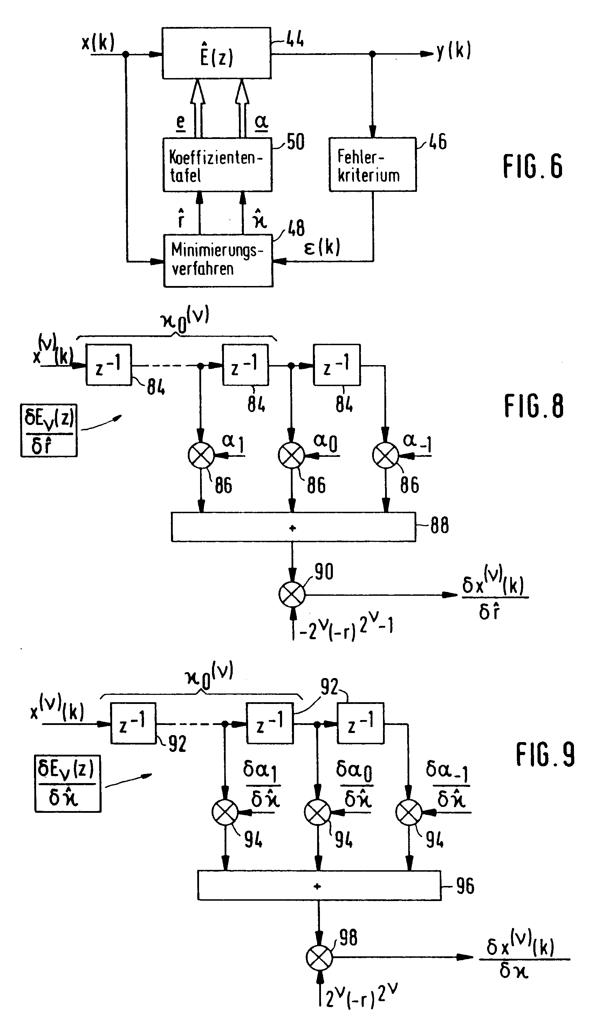

wobei $a_0{}^2$ eine Referenzamplitude ist, auf die geregelt werden soll, und wobei $\epsilon(k)$ die momentane Abweichung bedeutet. Gemäß dem Prinzipschaltbild in Fig. 6 wird also auf minimale Betragsschwankungen des entzerrten FM-Signals geregelt. Am Ausgang des adaptiven Kaskadenentzerrers 44 wird mit einer Erkennungsschaltung 46 das Fehlerkriterium ermittelt, und in der nachgeschalteten Optimierungsschaltung 48 erfolgt eine Minimierung. Über die Koeffizententafel 50 werden schließlich die Entzerrerkoeffizienten adaptiv so eingestellt, daß sich die minimalen Betragsschwankungen des entzerrten FM-Signals ergeben.

Mit dem stochastischen Gradientenalgorithmus erhält man folgende Gleichungen:

$$\hat{r}(i+1) = \hat{r}(i) - \gamma_{\hat{r}} \frac{\partial F}{\partial \hat{r}}$$

$$\hat{x}(i+1) = \hat{x}(i) - \gamma_{\hat{x}} \frac{\partial F}{\partial \hat{x}}$$

um $\hat{r}$ und $\hat{x}$ zu identifizieren. $\gamma_r$ und $\gamma_x$ sind empirisch zu ermittelnde Schrittweiten. Die Auswertung der obigen Gleichungen führt zu den Beziehungen:

$$\hat{r}(i+1) = \hat{r}(i) - 4\gamma_{\hat{r}} \, \epsilon(i) \cdot y(i) \cdot \left(\frac{\partial y(i)}{\partial \hat{r}(i)}\right)^*$$

$$\hat{x}(i+1) = \hat{x}(i) - 2\gamma_{\hat{x}} \, \epsilon(i) \, \mathrm{Re}\left\{y(i) \left(\frac{\partial y(i)}{\partial \hat{x}(i)}\right)^*\right\}$$

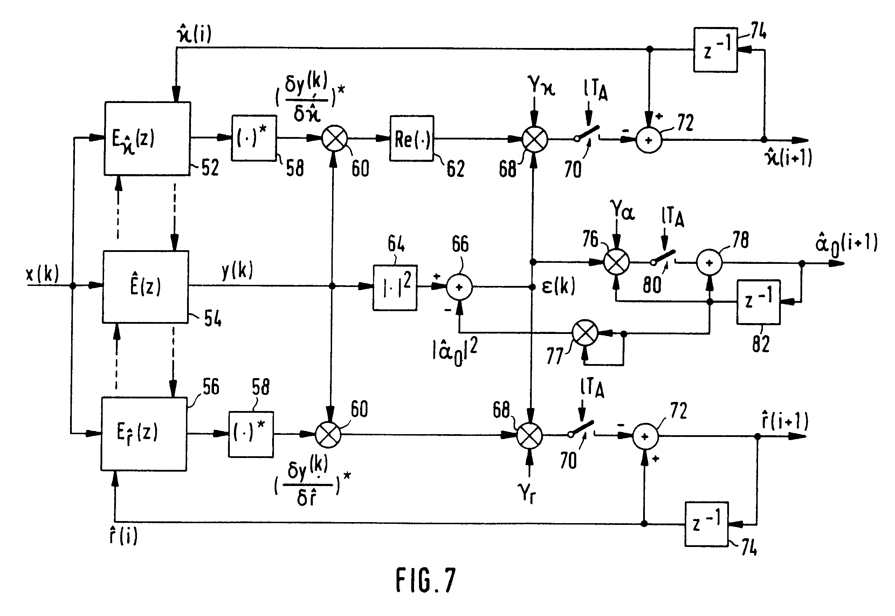

mit denen sich der Reflexionsfaktor $\hat{r}$ sowie die Laufzeit $\hat{x}$ nur in Abhängigkeit von y beschreiben lassen. Die Symbole ( )* bezeichnen die Konjugation komplexer Signale. Die Realisierung der beiden voranstehenden Gleichungen erfolgt durch das Blockschaltbild gemäß Fig. 7 mit den in Kaskadenform angeordneten Entzerrerblöcken 52, 54 und 56.

Im oberen und unteren Zweig des Blockschaltbildes gemäß Fig. 7 sind jeweils eine Konjugation 58, ein Multiplizierer 60, ein Multiplizierer 68, ein Abtaster 70, ein Addierer 72 sowie ein Zwischenspeicher 74 angeordnet. Zwischen den oberen Multiplizierern 60 und 68 befindet sich ein Realteilbildner 62. Der mittlere Entzerrerblock 54 ist mit einen Betragsquadratbilder 64 verbunden, an den sich ein Addierer 66 anschließt.

Bei den Abtastern 70 gibt der Buchstabe I den Iterationsschritt an, wobei hier I = k ist, und $T_A$ stellt das Abtastintervall dar. Im vorliegenden Fall wird also mit jedem Abtastintervall ein Iterationsschritt vorgenommen.

Zur Gewinnung der Werte $\hat{a}_0(i + 1)$ bzw. zur Realisierung der Gleichung

$$\hat{a}_0(i + 1) = \hat{a}_0(i)(1 + \gamma_\alpha \mathcal{E}(i))$$
$$= \hat{a}_0(i) + \gamma_\alpha \hat{a}_0(i) \mathcal{E}(i)$$

sind in dem Blockschaltbild gemäß Fig. 7 die Multiplizierer 76, 77, ein Addierer 78, ein Abtaster 80 sowie ein Zwischenspeicher 82 vorgesehen.

Der obere Zweig des Blockschaltbildes gemäß Fig. 7 entspricht praktisch der Realisierung der weiter oben angegebenen Beziehung für die Größe $\hat{x}(i + 1)$, mit welcher sich die Laufzeit $\hat{x}$ nur in Abhängigkeit von y beschreiben läßt, während der untere Zweig des Blockschaltbildes gemäß Fig. 7 die Realisierung zur Gewinnung der Größe $\hat{r}(i + 1)$ darstellt, mit der sich der Reflexionsfaktor $\hat{r}$ nur in Abhängigkeit von y beschreiben läßt.

Die differenzierenden Netzwerke $E_x(z)$ und $E_r(z)$ werden für die hier betrachtete Kaskadenform nachfolgend näher spezifiziert. Für die Ableitung der differenzierenden Netzwerke $E_{\hat{r}}(z)$ und $E_{\hat{x}}(z)$ gilt:

$$E_{\hat{r}}(z) = \frac{\partial}{\partial \hat{r}} E(z) \qquad\qquad E_{\hat{x}}(z) = \frac{\partial}{\partial \hat{x}} E(z)$$

Die Kaskadenform ist durch eine Hintereinanderschaltung von Teilsystemen gemäß der nachfolgenden Gleichung gekennzeichnet:

$$E(z) = \prod_{\nu=0}^{N-1} E_\nu(z)$$

Nach der bekannten Produktregel der Differention gilt:

$$\frac{\partial E(z)}{\partial \hat{r}} = \sum_{\mu=0}^{N-1} \frac{\partial E_\mu(z)}{\partial \hat{r}} \prod_{\substack{\nu=0 \\ \nu \neq \mu}}^{N-1} E_\nu(z)$$

$$\frac{\partial E(z)}{\partial \hat{x}} = \sum_{\mu=0}^{N-1} \frac{\partial E_\mu(z)}{\partial \hat{x}} \prod_{\substack{\nu=0 \\ \nu \neq \mu}}^{N-1} E_\nu(z)$$

Die Teilblöcke $E_\mu(z)$ stellen Transversalformen dar, so daß die an sich bekannten und weiter oben anhand von Fig. 2 und 3 schon erwähnten Ableitungen

5

$$\frac{\partial E_\mu(z)}{\partial \hat{r}} \quad, \quad \frac{\partial E_\mu(z)}{\partial \hat{x}}$$

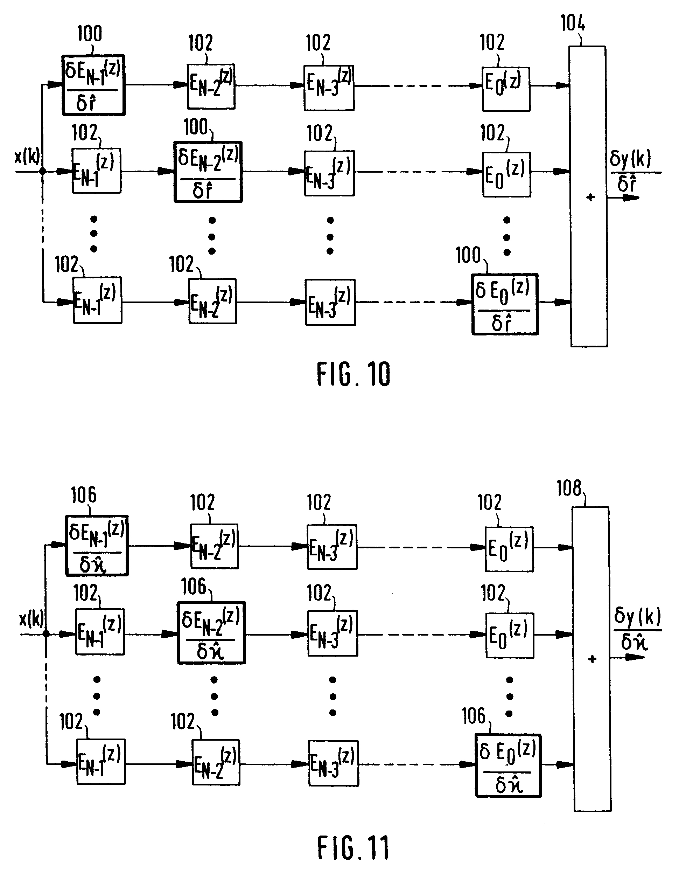

übernommen werden können. Die zugehörigen Teil-Netzwerke sind in Fig. 8 und 9 dargestellt. Dabei zeigt Fig. 8 eine Struktur zur Realisierung der abgeleiteten Teilentzerrer-Übertragungsfunktionnach dem Reflexionsfaktor $\hat{r}$, und Fig. 9 die entsprechende Struktur nach dem Laufzeitparameter $\hat{x}$. Die Ableitung der Interpolationskoeffizienten $(\partial\alpha_1/\partial\hat{x})$ ist eindeutig durch $\hat{x}$ bestimmt; die Berechnung kann beispielsweise nach dem Verfahren von Lagrange erfolgen.

Das Blockschaltbild des differenzierenden Netzwerkes $E_{\hat{r}}$ (z) umfaßt mehrere Verzögerungsglieder 84, Multiplizierer 86, sowie ein Addiernetzwerk 88 mit einem nachgeschalteten Multiplizierer 90.

Ähnlich beinhaltet das Blockschaltbild des differenzierenden Netzwerkes $E_{\hat{x}}$ (z) gemäß Fig. 9 mehrere Verzögerungsglieder 92, Multiplizierer 94, ein Addiernetzwerk 96 sowie einen nachgeschalteten Multiplizierer 98.

In Fig. 10 und 11 ist jeweils ein schematisches Blockschaltbild zur Realisierung der weiter oben beschriebenen Produktregeln der Differentation dargestellt. Zur Verdeutlichung sind die jeweils differenzierenden Netzwerke 100 bzw. 106 stark umrandet gezeichnet. Neben den differenzierenden Netzwerken 100 bzw. 106 sind noch die Entzerrerblöcke 102 vorgesehen, die - zusammen mit den differenzierenden Netzwerken 100 bzw. 106 jeweils zu einem gemeinsamen Addiernetzwerk 104 bzw. 108 führen.

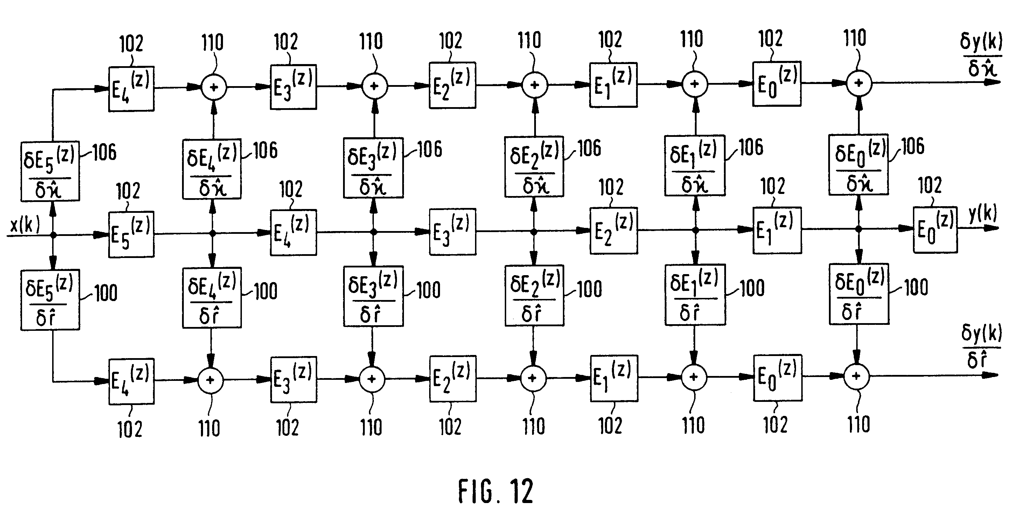

Es ist ohne weiteres ersichtlich, daß eine schaltungstechnische Realisierung der Produktregel der Differentation gemäß den Blockschaltbildern nach Fig. 10 und 11 wegen der Vielzahl der einzelnen Reihenschaltungen einen erheblichen Aufwand bedeuten würden. Gemäß dem Blockschaltbild nach Fig. 12 läßt sich dieser Aufwand zur schaltungstechnischen Erzeugung der Gradienten $\partial y/\partial\hat{r}$ und $\partial y/\partial\hat{x}$ erheblich reduzieren. Gleiche Teile aus Fig. 10 und 11 sind in Fig. 12 zur besseren Verdeutlichung mit gleichen Bezugszeichen versehen; zusätzlich sind noch die Addierer 10 vorgesehen, um die vereinfachte Realisierung der erwähnten Produktregeln zu ermöglichen.

Für die Differenzier-Netzwerke 100 bzw. 106 gemäß Fig. 12 sind die Strukturen entsprechend Fig. 8 und 9 einzusetzen. Die Entzerrerblöcke 102 entsprechen dem Aufbau gemäß Fig. 4 bzw. Fig. 5.

Zweckmäßig sind die einzelnen Blöcke nach fallender Ordnung (fallende Indizierung) angeordnet. Dadurch lassen sich die Auswirkungen unerwünschter Einschwingvorgänge bei der Veränderung der Koeffizienten auf minimale Werte reduzieren.

Der Aufbau des Blockschaltbildes gemäß Fig. 12 läßt sich in der Praxis noch stark vereinfachen, indem die Berechnung von $\partial y/\partial\hat{r}$ bzw. $\partial y/\partial\hat{x}$•nur näherungsweise vorgenommen wird. Diese Vereinfachung beruht auf der Erkenntnis, daß die Beiträge der Ableitungen von $E_0$, $E_1$ wesentlich größer als die restlichen Werte sind, die daher vernachlässigt werden können, zumal bei den Ableitungen nur die Ermittlung der Richtung von Interesse ist.

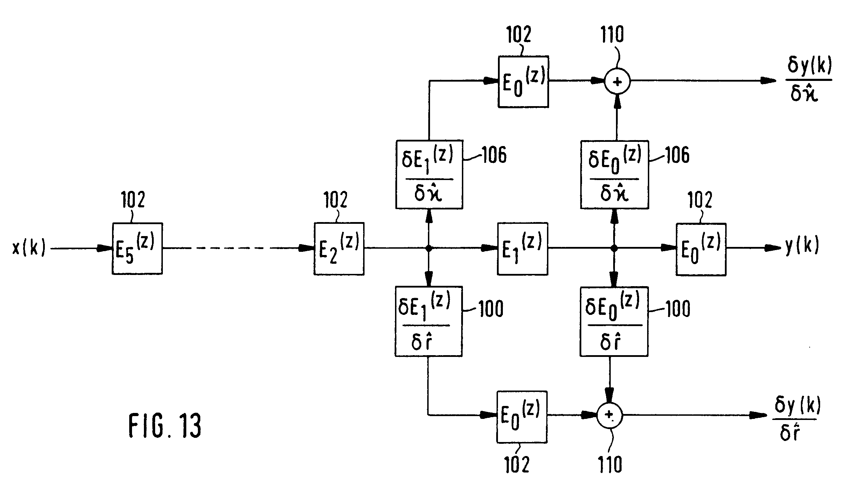

Auf die Konvergenz bei der adaptiven Entzerrereinstellung hat diese Vereinfachung nur unwesentliche Auswirkungen, so daß in zweckmäßiger Ausgestaltung das in Fig. 13 gezeigte Blockschaltbild zur Anwendung gelangen kann, wobei die partiellen Ableitungen $\partial E_2(z)/\partial\hat{r},\hat{x}$ ... $\partial E_{N-1}/\partial\hat{r},\hat{x}$ vernachlässigt werden.

**Patentansprüche**

1.  Autoradio mit einem Kaskadenentzerrer in nichtrekursiver Form zur Beseitigung von durch Mehrwegeempfang bei FM-Übertragung hervorgerufenen Störungen, wobei dem Kaskadenentzerrer bzw. den einzelnen in Reihe geschalteten Entzerrerblöcken Entzerrerkoeffizienten zur Kompensation der Störungen zugeordnet sind und die Entzerrerkoeffizienten adaptiv an die jeweiligen Empfangsverhältnisse angepaßt werden, dadurch gekennzeichnet,
    daß die Entzerrerblöcke (102) nach fallender Ordnung in der Kaskade angeordnet sind.

2.  Autoradio nach Anspruch 1,
    dadurch gekennzeichnet,
    daß die partiellen Ableitungen höherer Ordnung der Entzerrerblöcke (102) bei der Berechnung der Gradienten

$$\frac{\partial y}{\partial \hat{r}}$$

und/oder

$$\frac{\partial y}{\partial \hat{x}} )$$

wobei y das entzerrte FM Signal, $\hat{r}$ der Reflexionsfaktor und $\hat{x}$ die Laufzeit ist, vernachlässigt werden.

## Claims

1. Car radio having a cascade antidistortion device in non-recursive form to eliminate interferences caused by multipath reception in FM transmission, in which antidistortion coefficients for the compensation of the interferences are associated with the cascade antidistortion device and/or the individual series-connected antidistortion units, and the antidistortion coefficients are adaptively matched to the respective reception conditions, characterised in that the antidistortion units (102) are arranged in descending order in the cascade.

2. Car radio according to Claim 1, characterised in that the higher-order partial derivatives of the antidistortion units (102) are disregarded in the computation of the gradient

$$\frac{\partial y}{\partial \hat{r}}$$

and/or

$$\frac{\partial y}{\partial \hat{x}} ,$$

where y is the FM signal after antidistortion processing, $\hat{r}$ is the reflection factor and $\hat{x}$ is the transit time.

## Revendications

1. Autoradio à égaliseur non récursif en cascade pour éliminer les parasites provoqués à la réception MF par la réception par chemins multiples, l'égaliseur en cascade ou les différents blocs d'égaliseurs branchés en série recevant les coefficients d'égaliseurs pour compenser les parasites et les coefficients d'égaliseurs étant adaptés de manière adaptative aux conditions de réception respectives, autoradio caractérisé en ce que
les blocs égaliseurs (102) sont montés en cascade en ordre décroissant.

2. Autoradio selon la revendication 1, caractérisé en ce que les dérivés partiels d'ordre supérieur des blocs égaliseurs (102) sont négligés pour le calcul des gradients

$$\frac{dy}{d\hat{r}}$$

et/ou

7

$$\frac{dy}{d\hat{x}} \; ,$$

y étant le signal MF égalisé $\hat{r}$ le coefficient de réflexion et $\hat{x}$ le temps de parcours.

EP 0 325 668 B1

FIG.1

FIG.2

FIG.3

EP 0 325 668 B1

$x_v^{(v)}$

$-x_0^{(v)}$

$x_v^{(v)}$

$x^{(v)}(k)$ → $z^{-1}$ --- $z^{-1}$ $z^{-1}$ --- $z^{-1}$ $z^{-1}$ --- $z^{-1}$ → $+$ → $y^{(v)}(k)$

24  24  24  24  24  24  30

$\alpha_{-1}^{(v)}$  $\alpha_0^{(v)}$  $\alpha_1^{(v)}$

$\otimes$  $\otimes$  $\otimes$

26  26  26

$+$  28

32  $(-r)^{2^v}$ $\otimes$

**FIG.4**

$x_v^{(v)}$

$x_0^{(v)}$

$x^{(v)}(k)$ → $z^{-1}$ --- $z^{-1}$ $z^{-1}$ --- $z^{-1}$ $z^{-1}$ --- $z^{-1}$ → $+$ → $y^{(v)}(k)$

34  34  34  34  34  34  40

$\alpha_{-1}^{(v)}$  $\alpha_0^{(v)}$  $\alpha_1^{(v)}$

$\otimes$  $\otimes$  $\otimes$

36  36  36

$+$  38

42  $(-r)^{2^v}$ $\otimes$

**FIG.5**

x(k)

$\hat{E}(z)$ — 44 — y(k)

$\underline{e}$   $\underline{\alpha}$

Koeffizienten-tafel — 50

Fehler-kriterium — 46

$\hat{r}$   $\hat{\varkappa}$ — 48   $\varepsilon(k)$

Minimierungs-verfahren

**FIG. 6**

$\varkappa_0^{(v)}$

$x^{(v)}(k)$   $z^{-1}$ — 84 — $z^{-1}$ — 84 — $z^{-1}$ — 84

$\dfrac{\delta E_v(z)}{\delta \hat{r}}$

$\alpha_1$   $\alpha_0$   $\alpha_{-1}$

⊗ — 86   ⊗ — 86   ⊗ — 86

+ — 88

⊗ — 90

$-2^v(-r)2^v-1$   $\dfrac{\delta x^{(v)}(k)}{\delta \hat{r}}$

**FIG. 8**

$\varkappa_0^{(v)}$

$x^{(v)}(k)$   $z^{-1}$ — 92 — $z^{-1}$ — 92 — $z^{-1}$

$\dfrac{\delta E_v(z)}{\delta \hat{\varkappa}}$

$\dfrac{\delta \alpha_1}{\delta \hat{\varkappa}}$   $\dfrac{\delta \alpha_0}{\delta \hat{\varkappa}}$   $\dfrac{\delta \alpha_{-1}}{\delta \hat{\varkappa}}$

⊗ — 94   ⊗ — 94   ⊗ — 94

+ — 96

⊗ — 98

$2^v(-r)2^v$   $\dfrac{\delta x^{(v)}(k)}{\delta \varkappa}$

**FIG. 9**

FIG.7

EP 0 325 668 B1

FIG. 10

FIG.11

FIG. 12

FIG. 13